# EUROPÄISCHE PATENTSCHRIFT

(11) **EP 1 713 682 B1**
(45) Veröffentlichungstag und Bekanntmachung des Hinweises auf die Patenterteilung: **07.05.2008**
(21) Anmeldenummer: 05700022.6
(22) Anmeldetag: 27.01.2005
(51) Int. Cl.: B62D 25/20

(54) **FUSSBODEN VON PERSONENKRAFTWAGEN**
FLOOR FOR AUTOMOBILES
PLANCHE D'AUTOMOBILE

(30) Priorität: 02.02.2004 EP 04450021
(43) Veröffentlichungstag der Anmeldung: 25.10.2006
(73) Patentinhaber: Wiemer, Welf, 1070 Wien (AT)
(72) Erfinder: Wiemer, Welf, 1070 Wien (AT)
(74) Vertreter: Patentanwälte BARGER, PISO & PARTNER
(86) Internationale Anmeldenummer: PCT/AT2005/000023
(87) Internationale Veröffentlichungsnummer: WO 2005/073056

(56) Entgegenhaltungen:
- WO-A-96/40515
- GB-A- 298 713
- US-A- 3 992 835
- US-A1- 2003 102 690

## Beschreibung

Die Erfindung betrifft Personenkraftwagen, so genannte PKWs, deren Fußboden zumindest einen Bereich mit einer Tragschicht und einer Deckschicht aufweist, entsprechend dem einleitenden Teil des Anspruches eins, und ein Verfahren zur Herstellung eines solchen Fußbodens. In der weiter unten erläuterten GB 298.713 A ist ein Fußboden dieser Art beschrieben.

Neuzeitliche PKWs besitzen eine zumeist mit mehreren Vertiefungen, Erhebungen, Ausnehmungen und seitlichen, nach oben gezogenen Schürzen versehene, zumeist metallische Plattform, die üblicherweise einstückig die Bodenplatte der selbsttragenden Karosserie darstellt oder einen Teil derselben bildet. In den von den Passagieren einsehbaren Bereichen ist der Fußboden üblicherweise ein Teppichboden, der entsprechend vorgeformt und gegebenenfalls mit einer ein- oder mehrlagigen Rückenbeschichtung versehen und mit den notwendigen Ausnehmungen für die Befestigungspunkte der Sitze u.dgl. ausgestattet ist und passend mit der Oberseite des Bodenbleches verbunden wird.

Es hat schon verschiedentlich Versuche gegeben, andere Oberflächen für derartige Böden zu schaffen, beispielsweise bereits 1928 in der GB 298 713 A, die einen PKW gemäß dem Oberbegriff des Anspruchs 1 offenbart. Diese Druckschrift schlägt für Autos, für Flugzeuge oder Gangways vor, auf Aluminiumblech, das zur Erhöhung seiner Steifigkeit gewellt oder mit Beulen versehen ist, eine Masse aus granuliertem Kork in einer Matrix aufzubringen, die beispielsweise aus Kasein und Formaldehyd besteht. Dieser Boden ist zwar relativ leicht, aber unansehnlich und nicht ausreichend abriebfest.

Die US 3,992,835 A betrifft den Aufbau einer geheizten Fläche, eventuell Fußbodens, bei dem gewellte Bleche einen Kern bilden, in dem Heizungsrohre laufen. Beiderseits des Kerns sind glatte Bleche befestigt, zwischen dem Kern und den Außenblechen kann ein Füllmaterial, genannt wird Beton, eingefüllt sein. Das Aussehen und die mechanischen Eigenschaften der Außenseite werden von dieser Druckschrift nicht behandelt.

Die WO96140515 A betrifft keine PKW sondern LKW und schlägt vor, die Ladefläche, aus Holzbohlen mit einer Breite von 6 bis 8 Inches, entsprechend etwa 15 bis 20 cm und bis zu gleicher Dicke (!) herzustellen, die zur Fahrbahn hin freiliegende (untere) waagrechte Oberfläche mit einer dünnen Beschichtung aus glasfaserverstärktem Kunststoff zu versehen und durch den Boden und die Beschichtung hindurch auf ein Gestell aus Stahlprofilen zu schrauben. Die Beschichtung dient zur Vermeidung des Wasserzutrittes und zur Verbesserung der mechanischen Eigenschaften. Diese an den Schiffsbau gemahnende Konstruktion ist für PKWs völlig unbrauchbar.

Die US2003/0102690 A beschreibt einen Boden für einen PKW, der aus einer passend geformten Wanne besteht, die aus mehreren Schichten aufgebaut ist, darunter solche, die als elektrischer Leiterkreis und Schaltkreis dienen, solche, die Licht leiten, solche, die der Schalldämmung dienen, etc.. Jedenfalls ist aber immer die oberste, dem Benutzer zugewandte Schicht ein Teppich, ändert somit nichts am Erscheinungsbild des Fahrzeuginneren.

Aus der DE 199 28 720 A ist eine Auskleidung für den Fußraum eines Kraftfahrzeuges bekannt, deren Aufgabe es ist, den ästhetischen Eindruck und die ansprechende Wirkung der Optik zu verbessern. Dazu schlägt die Druckschrift vor, einen am Boden des KFZ aufliegenden Basiskörper aus Teppichmaterial, hartem Kunststoff oder Leder zu verwenden, der mindestens eine Ausnehmung, ob darunter eine Vertiefung oder eine Durchbrechung zu verstehen ist, wird nicht bestimmt, aufweist, in die ein Einsatzkörper aus Holz und/oder Metall und/oder Kunststoff und/oder Glas und/oder Leder und/oder Stein eingesetzt ist. Verschiedene Maßnahmen sollen das Eindringen von Schmutz in die Ritzen zwischen dem Basiskörper und dem Einsatzkörper vermeiden. Diese Maßnahmen scheinen aber nicht erfolgreich gewesen zu sein, denn ein derartiger Boden hat es nicht bis zur praktischen Anwendung gebracht.

Bei vielen Teppichböden besteht die Verbindung zwischen Teppichunterseite bzw. eigener Lage zur Lärmdämmung und Blechboden aus einer flächigen Verklebung, da dadurch jedwedes Verrutschen und damit jede Faltenbildung zuverlässig vermieden wird und da dadurch auch die Korrosionsgefahr im engen, spaltartigen Bereich zwischen der Bodenplatte aus Metall und dem Rücken des Teppichs hintangehalten wird und schließlich, weil dadurch eine hervorragende Vibrationsdämpfung und damit eine Geräuschminderung und eine Anhebung des Komforts der Passagiere verbunden ist.

Andere Befestigungen umfassen das Einklemmen im Randbereich des Teppichs, was einen, wenn auch schwierigen, Ausbau ermöglicht, aber dafür die Faltenbildung zuläßt und für die Schalldämpfung nicht optimal ist.

In vielen Fällen sind diese Teppiche in den Bereichen, in denen sie besonders beansprucht werden, so beispielsweise an den Stellen, an denen der Fahrer im Bereich der Pedale üblicherweise seine Fersen abstützt, mit Verstärkungselementen oder mit Kunststoffeinlagen od.dgl. versehen, um dem an diesen Stellen erhöhten Abrieb zu begegnen.

Diese Teppichböden haben sich im wesentlichen bewährt, weisen aber doch auch Nachteile auf: Obwohl üblicherweise hoch qualitative Materialien verwendet werden, kann nicht verhindert werden, dass die Teppiche im Laufe des Gebrauches fleckig und unansehnlich werden. Insbesondere, wenn Flüssigkeiten verschüttet werden oder wenn Kaugummis zertreten werden, kommt es zu starken optischen Beeinträchtigungen. Darüber hinaus sind gerade diese Teppichböden, die ja unmittelbar von Parkplätzen, der Straßen, Wiesen und ähnlicher Umgebung aus betreten werden, einer besonders hohen Verschmutzung und einem hohen Eintrag an Fremdkörpern ausgeliefert, können aber ihrerseits nur durch Staubsaugen gereinigt werden, da alle anderen Arten der Reinigung nicht in der Lage sind, Fremdkörper aus dem Flor des Teppichs zu entfernen. Eine chemische Reinigung ist nur nach dem aufwendigen Ausbau aus dem Fahrzeug möglich, bei verklebten Teppichen somit so gut wie gar nicht.

Für die schlechte Reinigungsmöglichkeit derartiger Teppiche ist es auch ein Indiz, dass insbesondere bei viel genutzten Fahrzeugen bzw. im Bereich der Sitze, die von Kindern benutzt werden, auf die Teppiche Gummimatten und sogar Gummi- bzw. Kunststoffschalen gelegt werden, die das Verschmutzen der Teppiche verhindern sollen.

Schließlich stellen Teppiche, auch die verwendeten synthetischen Teppiche, eine Brutstätte für Mikroorganismen dar, die die Gesundheit und das Wohlbefinden der Fahrgäste, insbesondere der Fahrgäste mit Neigung zu Allergien, beeinträchtigen können.

Dass die Verwendung der Teppiche nicht zwingend mit objektiven Kriterien einhergeht, geht auch daraus hervor, dass Nutzfahrzeuge, wie LKW oder Busse, bei denen der Fahrersitz praktisch den Arbeitsplatz darstellt, praktisch nie mit solchen Teppichen ausgerüstet sind. Bei derartigen Fahrzeugen verwendet man porenlose, glatte Gummi- oder Kunststoffinaterialien, auf die unter Umständen zur Erhöhung der Behaglichkeit Teppiche lose aufgelegt werden. Diese losen Teppiche kann man auch leicht durch Entnehmen aus dem Fahrzeug und Abklopfen im Freien reinigen. Es erscheint somit begründet, dass die Verwendung der (ausgeformten) Teppiche mehr auf die Wünsche der Hersteller, für die die Montage eines einstückigen, genau passenden Teils einfacher ist als der früher, bis in die 60-iger Jahre übliche, stückweise Aufbau des Bodenbereiches, Rücksicht nimmt als auf die Wünsche der Benutzer.

Dazu kommt eine Art Modeerscheinung, die, zeitlich der Verwendung der geformten Teppiche im Automobilbau vorausgehend, auch im Wohn- und Arbeitsbereich Spannteppiche, die von Wand zu Wand reichen und flächig mit dem Boden verklebt sind, favorisiert hat. In den letzten Jahren allerdings ist ein deutlicher Rückgang des Anteils der Spannteppiche bei neu verlegten Böden festzustellen, was sicherlich auch im Wohnungsbereich auf die oben genannten objektiven Nachteile des Spannteppichs zurückzuführen ist.

In der Zwischenkriegszeit bestand im Automobilbau der Fußboden häufig aus Holz, doch war stets eine Abdeckung aus Gummi oder Teppichmaterial vorgesehen, da der bloße Holzboden unter den üblichen Betriebsbedingungen (Feuchtigkeit!) rasch unansehnlich wurde. Des weiteren wurde Formsperrholz (bestehend aus mit Kunstharz verpreßten Furnierschichten) noch in den 90-er Jahren als Unterboden in der Formel-1 verwendet, wobei die Haltbarkeit und Ansehnlichkeit keine Rolle spielte. Solches Formsperrholz wurde auch zur Verkleidung von Bussen eingesetzt. Problematisch ist dabei die Splittergefahr, die Formgebung und die kunststoffnahe Optik. Analog dazu werden derzeit auch Zierteile im Automobilbau aus Ersatzstoffen oder Furnierschichten, die auf Tragteile aus einer Aluminiumlegierung oder MDF aufkaschiert sind, gefertigt. Derartige Konstruktionen eignen sich allerdings nicht für den Bodenbereich, da sie den mechanischen Beanspruchungen nicht dauerhaft widerstehen.

Es besteht somit ein Bedarf an einem Fußboden für PKWs, der einerseits die Forderungen der Hersteller nach einfachem kostengünstigen Einbau erfüllt und andererseits den Benutzern der Kraftfahrzeuge eine leichte Reinigung, ein Vermeiden der allgemeinen oben genannten Nachteile der Teppichböden und ein optisch ansprechendes Aussehen aufweist. Die im Automobilbau üblichen Randbedingungen, die an die Festigkeit, an die Anforderungen des Leichtbaues, an die brandhemmenden Eigenschaften, an die mangelnde Toxizität, an die mechanische Sicherheit, insbesondere den Splitterschutz, u.dgl. gestellt werden, müssen selbstverständlich ebenfalls mit erfüllt sein, doch ist dies in Anbetracht des Verwendungszweckes eine Selbstverständlichkeit.

Diese Zeile werden erfindungsgemäß durch einen PKW gemäß Anspruch 1 sowie ein Verfahren gemäß Anspruch 12 erreicht.

Durch die Erfindung wird es möglich, in Kraftfahrzeugen einen Fußboden zu verwenden, der den Holzfußböden im Wohnbereich optisch gleich kommt und die Nachteile der Teppichböden vollständig vermeidet.

Holz wurde im Automobilbau an sich seit Beginn desselben verwendet, in den letzten Jahrzehnten allerdings mehr und mehr zurückgedrängt auf dekorative Elemente im Bereich des Armaturenbrettes und der Türverkleidungen. Auch diese Bereiche sind seit vielen Jahren nicht mehr aus massivem Holz, sondern bestehen aus einem Trägermaterial, auf das eine dünne Schichte aus Holz oder Holzimitat aufgebracht ist. All diese Bauteile sind nicht in der Lage, auch nur annähernd den Belastungen standzuhalten, denen ein Fußboden über lange Zeiträume standhalten muß.

Die üblichen Furniere, die im Wohnungsbau oder Bürobau bei der Herstellung von Holzfußböden verwendet werden, sind auf Platten aufgebracht, die aus sogenannten Holzfaserwerkstoffen od.dgl. bestehen, so dass das Furnier nur Druckkräfte auf den Untergrund zu übertragen braucht, wodurch seine mechanische Belastung, wenn auch nicht sein Abrieb, deutlich reduziert ist. Derartige Untergründe sind aber zur Verwendung der dreidimensional gebogenen Schalen des Fußbodenbereiches von Kraftfahrzeugen nicht zugänglich gewesen. Auch ist die Feuchtigkeitsbeanspruchung in diesem Bereich für derartige Materialien zu groß, da sie quellen und der Zersetzung durch Bakterien und Pilze anheimfallen.

Es ist auch bekannt, Furnier zu Dekorationszwecken nach intensivem Dämpfen auf dreidimensional gekrümmte Oberflächen aufzukleben, doch werden die so hergestellten Gegenstände, die mechanisch nicht stabil sind, eben nur zur Dekoration verwendet.

Erst durch die erfindungsgemäße Kombination einer aus Kunststoff mit hohem Elastizitätsmodul hergestellten Tragschale mit einer auf der Benutzerseite aufgebrachten Deckschicht aus Furnier ist es möglich geworden, die mechanische Beanspruchung des im Wohnungsbau üblichen Holzbodens auf die gekrümmten Verhältnisse im KFZ-Boden tauglich zu übertragen. Damit wird auch die Empfindlichkeit gegenüber den Feuchtigkeitsschwankungen und Stehwasser eliminiert bzw. deutlich reduziert.

Die Dicke und das Material der Tragschale spielt keine große Rolle, soferne die Tragschale flächig mit dem KFZ-Boden in Kontakt steht. In diesem Fall werden nämlich die auf das Furnier wirkenden Druckkräfte lokal auf die Tragschale übertragen, die wiederum diese Druckkräfte auf den Fahrzeugboden weiterleitet, ohne dass für das Furnier bzw. die Tragschale schädliche Biegespannungen auftreten; die Tragschale muß im wesentlichen nur Druckkräfte aufnehmen und ertragen. Ohne solche flächige "starre" Unterstützung kommt zum Tragen, dass die Tragschale einen höheren Elastizitätsmodul aufweist als das verwendete Furnier, dadurch findet ein "Durchdrücken" bzw. "Durchbiegen" des Furniers nicht statt und der Boden in seiner benutzungsfertigen Form vermag die Belastung zu ertragen.

Wenn wegen großer Toleranzen oder dem Einbau in verschiedene, leicht unterschiedliche, Bodenplatten zu befürchten ist, dass Bereiche der Tragschale nicht ausreichend am Bodenblech aufliegen, so ist es notwendig, die Tragschale so weit zu verstärken, dass sie auch ohne flächige Unterstützung durch den Boden bei der lokalen Belastung durch den Passagier so formstabil bleibt, dass ein Durchdrücken des Furniers nicht zu befürchten ist. Die entsprechende Mindeststärke kann vom Fachmann auf dem Gebiet der Kunststofftechnologie in Kenntnis der zu erwartenden maximalen Belastung, beispielsweise eine Stöckelschuhe tragende erwachsene Person, in Kenntnis des verwendeten Furniers und des verwendeten Kunststoffes und unter Zugrundelegung des größten, nicht vom Bodenblech des Fahrzeug unterstützten, Bereiches leicht berechnet bzw. anhand einiger einfacher Versuche ermittelt werden.

Es wird bevorzugt, dass insbesondere die Randabmessungen der erfindungsgemäßen Tragschale samt Furnier im fertigen Zustand so ausgebildet sind, dass sie einen vorgefertigten Teppicheinsatz beim Zusammenbau des Kraftfahrzeuges direkt ersetzen kann, um die Logistik der Herstellung des KFZ so einfach wie möglich zu halten. Selbstverständlich ist es möglich und in einigen Fällen, speziell bei geometrisch komplexen oder großflächigen Fußböden auch vorteilhaft, die Tragschale in mehrere Bestandteile zu teilen, um deren Handhabung und Montage, aber auch eine Demontage, zu erleichtern.

Zur Vorbeugung gegen Stehwasser oder auch zur Verlagerung von Fremdkörpern wie Sand (Kratzergefahr) ist zudem ein Gefälle sinnvoll. Zur Reinigung ist eine seitliche Auswischbarkeit in Richtung Türen empfehlenswert, d.h. eine Vermeidung eines scharfen Winkels in diese Richtung. Wasserabläufe sind möglich, analog auch Auffangwannen in versteckten Bereichen wie z.B. unterhalb der Sitze, die geleert werden können; alternativ auch eine Integration in evtl. Einlagen (siehe weiter unten).

Analog dem heutigen Teppichboden ist natürlich auch eine Gliederung mit herausnehmbaren Teilen in den meistbelasteten Bodenzonen möglich, so dass bei einem evtl. Verkratzen oder sonstigen Beschädigungen diese Teile einzeln ausgewechselt werden können. Auch die Integration von Halterungen für nachträgliche Befestigung von Auflagen wie Gummimatten für den Winter oder Autoperserteppichen ist denkbar, wenn auch nicht hauptsächliches Ziel der Erfindung.

Als Material für die Tragschale kann jedes im Automobilbau bereits verwendete Kunststoffmaterial mit den passenden mechanischen Eigenschaften, insbesondere verstärktes und besonders bevorzugt faserverstärktes Material, zum Einsatz kommen. Dies können sowohl Thermoplasten als auch Duroplasten sein. Als Verstärkung können Glasmikrokugeln, Gesteinsmehl und andere, die Drucksteifigkeit erhöhende Materialien verwendet werden, insbesondere aber Fasern, durch die auch die Biegefestigkeit erhöht wird, wie natürliche Fasern, Glasfasern, aber in besonderen Fällen auch Kohlefasern oder Aramidfasern . Derartige Kunststoffmaterialien sind wegen ihrer hohen Festigkeit bei geringer Dichte besonders bevorzugt. Die Bezeichnung "Tragschale" bedeutet nicht, dass die Form dieses Gebildes tatsächlich einer Schale gleichen muß, die Form hängt vielmehr vom jeweiligen Einsatzgebiet ab und kann, insbesondere bei den derzeit sehr beliebten "Sport Utility Vehicles", den sogenannten SUVs, durchaus auch praktisch eben sein. Da aber in den meisten Fällen der Boden im Bereich eines jeden Sitzes eine schalenförmige Vertiefung aufweist, wurde in der vorliegenden Anmeldung diese Bezeichnung gewählt, ohne damit die Erfindung auf derartige Formen zu beschränken. Selbstverständlich können mehrere, die Bodenfläche jeweils teilweise abdeckende Tragschalen (auch mit beliebiger seitlicher Höhe) vorgesehen sein, beispielsweise jeweils eine für jeden Sitz.

Das Furnier kann mit einer oder mehreren Schichten aus Kunststoff, Lack, Wachs, Harz, durchsichtigem Kunststoff, etc. gegen Beschädigungen und das Eindringen von Feuchtigkeit geschützt sein, wie dies auch im Wohn- und Bürobereich durch Versiegeln od.dgl. geschieht. Es kann, insbesondere wenn die Tragschale aus einem hartgeschäumten Material besteht, eine als Gegenzug dienende Beschichtung durch eine Folie, insbesondere aus Feuchtigkeit abweisendem Material, auf ihrer dem Furnier abgewandten Seite aufgebracht sein, so dass, im Querschnitt gesehen, die fertige Schale eine Sandwichstruktur aufweist.

Es muß, wie eingangs erwähnt, nicht die gesamte dem Benutzer zugewandte Fläche mit Furnier belegt sein, es durchaus möglich und aus optischen Gründen in vielen Fällen vorteilhaft, beispielsweise den Getriebetunnel nicht mit Furnier, sondern mit einem optisch davon abgesetzten Material, beispielsweise in Form einer Folie, abzudecken. Dieses Material kann im gleichen Schritt wie das Furnier oder in einem eigenen Schritt vor oder nach dem Furnier mit der Trägerschale verbunden werden.

Der Begriff "Furnier", wie er hier verwendet wird, umfasst nicht nur die klassischen, bei Möbeln verwendeten Furniere, sondern auch die aus mehreren oder vielen Teilen zusammengesetzten Furniere, die im Tischlereigewerbe erhältlich und üblich sind. So gibt es bereits Furniere mit dem Aussehen von Schiffböden, von Fischgrätparkett u.dgl. mehr. All diese Furniere können für die Erfindung verwendet werden. Dabei werden erfindungsgemäß Furniere mit Stärken bis zu 3 mm, insbesondere bis 1 mm, und besonders bevorzugt zwischen 0,3 und 0,6 mm verwendet. Stärken unter 0,2 mm und über 3 mm sind nur in Sonderfällen empfehlenswert. Nach dem Verbinden mit der Tragschale ist es möglich, eine Reduktion der Stärke z.B. durch Abschleifen zu erzielen. Der so erhaltene Boden vereinigt die gewünschte Echtholzoberfläche mit bestmöglicher Widerstandskraft, da die Poren im Furnier im Bereich nahe der Tragschale zunehmend vom Harz gefüllt sind.

Beispiele für die dünnen Stärken sind Stellen, die keinen oder nur geringen mechanischen Beanspruchungen unterworfen sind und die wegen einer vorgegebenen Krümmung nur schlecht mit Furnieren größerer Stärke überzogen werden können; Beispiele für die großen Stärken sind ebene, aber mechanisch stark beanspruchte Stellen, an denen unter Umständen das Furnier im Laufe des Lebens des KFZ abgeschliffen werden muss, um wieder ein optisch einwandfreies Bild zu liefern.

So, wie schon bisher bei den Teppichen, ist es selbstverständlich möglich und vorteilhaft, an höchst belasteten Stellen, wie beim Fahrerboden vor den Pedalen, Einsätze aus extrem widerstandsfähigen Material vorzusehen, dies ist bei der Anbringung an der Tragschale noch leichter möglich als bei den bekannten Teppichen. Gleichermaßen können in diesem Bereich Korundpartikel zur Erhöhung der Abriebfestigkeit oder sandähnliche Partikel zur Erhöhung der Rutschfestigkeit in die Oberflächenschicht eingelagert werden.

Zur Frage der Sicherheit der Passagiere soll noch ausgeführt werden, dass durch die geringe Dicke des Furniers und die flächige Verklebung ein Splittern des Furnier im Falle eines Unfalles nicht zu befürchten ist und dass diese Gefahr auch für die Tragschale als Ganzes, so wie schon im Stand der Technik bei größeren Kunststoffteilen im Automobilbau bekannt, durch Vorsehen von Sollbruchstellen an passenden Stellen für den Fall der Überbelastung vermieden werden kann. Es kann auch durch das Vorsehen einer besonders stabilen Schichte, die beispielsweise mit Aramidfasern verstärkt ist, die "Neutrale Linie" beim Biegen zum Furnier verschoben wird, sodass die Splitterlänge merklich verkürzt wird.

Als Leime kommen insbesondere Harnstoffharzleime, Polyvinylacetatleime, Ethen-Vinylacetatleim, aber auch Schmelzkleber, Polyurethane, Epoxydharzkleber oder Resorcinleime in Frage. Dabei wird der gewählte Leim möglichst gleichmäßig dünn aufgetragen und sodann, je nach gewähltem Leim bei Umgebungstemperatur oder erhöhter Temperatur das Furnier aufgebracht und angepresst. Die Pressdauer liegt aber üblicherweise zwischen zwei und fünf Minuten, der Pressdruck zwischen 0,2 und 1,2 N/mm².

Die Pressen können mechanisch oder hydraulisch ausgebildet sein, für Sonderfälle, oder für heikle Stellen, die für automatisierte Pressen nicht zugänglich sind, ist selbstverständlich in Einzelfällen auch möglich, durch einen Furnierhammer das Furnier händisch aufzubringen. Es ist nicht notwendig, dass das Pressen in einem Schritt erfolgt, insbesondere bei konkaven Stellen können durch streifenweises Anpressen die Probleme mit der Orientierung des Pressstempels, der ja möglichst immer normal zur Fläche stehen soll, vermieden werden.

Als Trägematerialien eignen sich, wie weiter oben ausgeführt, Kunststoffe, deren Elastizitätsmodul höher ist als der des aufgebrachten Materials, dies ist im Falle von Holzfurnier zumeist 8.000 bis 16.0000 N/mm²; abhängig von der verwendeten Holzsorte; kritisch ist dabei der richtungsabhängige höchste Wert des Elastizitätsmoduls. Durch entsprechende Wahl des Trägermaterials wird dessen minimal notwendige Stärke bestimmt, da ja das Trägermaterial nicht nur zufolge seines hohen Elastizitätmoduls das Durchdrücken des Furniers verhindern muß, sondern auch selbst bei dieser Belastung in Form bleiben soll. Dabei bedeutet im Sinne der Erfindung das "in Form bleiben", dass bei der selbstverständlich bei Belastung immer erfolgenden Deformation das Furnier nicht beschädigt wird. Diese Bedingung ist im allgemeinen strenger als die Bedingung für die Tragfähigkeit der aus dem Trägermaterial hergestellten Tragschale.

Als Beispiele für das Trägermaterial können die folgenden Materialien angegeben werden, wobei die angegebenen Materialien mit einem Elastizitätsmodul unter der Obergrenze des Holzes im Zusammenhang mit weicherem Holz verwendet werden können, für härteres Holz aber ungeeignet sind:

| | |
|---|---|
| EP+70% CF-HM (Roving): 150.000 | UP-GF30: 13.000 N/mm², für Formteile |
| N/mm², | im Fahrzeugbau in Verwendung, |
| UP-GF70 (Roving): 33.000 N/mm², | PAEK-GF30: 12.100 N/mm², |
| PPS-(GF+Mineral)60: 33.000 N/mm², | SAN-GF35: 12.000 N/mm², |
| PPS-GF40: 17.000 N/mm², | EP mit Glasfaser und Mineralmehl |
| UP-GF50 (in Form einer Matte): 16.000 | verstärkt: 15.000 N/mm², |
| N/mm², | UP mit Glasfaser und Mineralmehl |
| PA66-GF60, trocken: 16.000 N/mm², | verstärkt: 16.000 N/mm², |
| PA 12-CF25, luftfeucht: 15.000 N/mm², | MF mit Glasfaser und Mineralmehl |
| PA6-GF50, trocken: 15.000 N/mm², | verstärkt: 10.000 N/mm², |
| PEEK-CF30: 13.500 N/mm², | Phenolharze gefüllt: 9-15.000 N/mm², |
| POM-GF40, Copolymer: 13.000 N/mm², | Melaminharze gefüllt: 5-10.000 N/mm². |
| PA66-GF50, luftfeucht: 13.000 N/mm², | Die beiden letztgenannten Kunststoffe |
| PET-GF30: 13.000 N/mm², | benötigen bei der Herstellung der Trag- |
| UP-GF50, luftfeucht: 13.000 N/mm², | schale einen hohen Verarbeitungsdruck. |

### Erklärung:

Die erste Abkürzung steht für das Reaktionsharz bzw. den unverstärkten Kunststoff, die zweite Abkürzung, hinter dem Bindestrich, für das Füll- bzw. Verstärkungsmaterial und seinen Anteil in %.
EP: Epoxyharze (Epoxidharze) [unverstärkt 3.500 N/mm²]
UP: Ungesättigter Polyester [unverstärkt 3.000-4.800 N/mm²]
PPS: Polyphenylensulfid
PA: Polyamide
PAEK: Polyaryletherketon
SAN: Styrol/Acrylnitril-Copolymer
PEEK: Polyetheretherketon
POM: Polyoxymethylen (Polyacetal)
PET: Polyethylenterephthalat
MF: Melamin-Formaldehyd-Harz bzw. Melaminharz
CF: Kohlenstofffasern
GF: Glasfasern
GK: Mikroglaskugeln

Es gibt Furnierleime bzw. Klebstoffe für warme bzw. kalte Verpressung, solche die schnell und solche die langsam abbinden. Beispielhaft seien Presszeiten von 4 bis 180 Minuten bei Pressdrücken von 0,5 bis 6 bar angegeben, Presstemperaturen von 10 bis 150°C und Klebstoffaufträge in der Größenordnung zwischen 100 und 150 g/m². Die jeweils aktuell anwendbaren Größen sind den Datenblättern leicht zu entnehmen und ihre Ermittlung stellt für den Fachmann auf dem Gebiet des Fumierens kein Problem dar.

Nahezu jede Holzsorte ist denkbar, allerdings haben die Holzarten spezifische Unterschiede, die zu zusätzlichen Vor- und Nachteilen führen (siehe hinreichende Dokumentationen in der Fachliteratur). Beispielhaft sei hier aufgezählt:
Teak- und Mahagoniholz mit besonders geringen Schwundwerten bei Feuchtigkeit; Teakholz mit hohem Ölgehalt, der einen zusätzlichen Nässeschutz bietet; Eiche besonders hart, grobe Struktur zur optischen Kratzerverdeckung und mit hohem Gerbsäureanteil, der zusätzlichen Fäulnis- und Pilzschutz bietet; Buche mit besten Biegeeigenschaften bei Verformungen, aber auch höchsten Quell- und Schwundwerten.

Verwendbar und marktüblich sind auch sogenannte Engineered-Furniere, d.h. durch Einfärbung, Verformung und Verleimung entstehen neue Massivholzblöcke, aus denen anschließend wieder neue Furniere geschnitten werden. Hierdurch ist sowohl die Nachbildung bekannter Furniere möglich, als auch beliebige neue Designs inkl. Intarsien. Trotzdem bleibt der Baum der eigentliche Rohstoffgeber für die Furniere.

Zusätzlich sind auch herstellerseitige Vorbehandlungen der Furniere wie z.B. Melamin-Overlay, Holzschutzmittel, Einfärbung etc. möglich.

Im Zuge der Herstellung des erfindungsgemäßen Belages besteht die Möglichkeit, das zur Fixierung verwendete Harz in einer solchen Menge zu verwenden und/oder das gleiche oder ein anderes Harz auch von oben her aufzubringen, dass es das Furnier zumindest teilweise, bevorzugt zumindest im wesentlichen vollständig durchtränkt. Bei Harzaufbringung von oben oder dem Eintauchen des Furniers ist die oberflächliche Aufbringung eines sogenannten Abreissgewebes, das überflüssiges Harz aufsaugt und nach dem Aushärten entfernt wird, vorteilhaft.

Durch das zumindest teilweise Durchtränken des Furniers erreicht man eine wesentliche Verbesserung seiner Abriebfestigkeit und der mechanischen Eigenschaften und schafft insbesondere die Grundlage für die Möglichkeit, durch Abschleifen des aufgebrachten Furniers nach dem vollständigen Aushärten des Harzes bis auf Stärken von 0,1 mm und darunter, eine überraschende Kombination von einem optisch einwandfreien Bild mit besonderer Härte, Strapazierfähigkeit und Widerstandskraft des Bodens zu erhalten.

Darüber hinaus wird durch die zumindest teilweise Durchdringung des Furniers mit Harz die Gefahr des Quellens beim Zutritt von Feuchtigkeit merklich verringert und in der Praxis völlig gebannt.

Die Herstellung der Tragschale und das Verbinden mit dem Furnier kann auf unterschiedliche Weise erfolgen, die nächstliegende Methode ist die getrennte Herstellung der Tragschale und das anschließende Furnieren.

Gängiges Verfahren für Thermoplasten ist das Spritzgießen. Aufgrund der erforderlichen Temperaturen ist damit analog Aluminium nur eine Fertigung der Trägerschale und nachträgliches Furnieren sinnvoll. Bei Duroplasten bzw. Reaktionsharzen (auch Kunstharze genannt) ist dagegen zusätzlich eine Furnierverklebung im gleichen Schritt möglich. Reaktionsharze finden zudem nicht nur Anwendung als Matrix und Furnierkleber, sondern können auch als Harztränkung für die Furnierschicht und teilweise auch Oberflächendeckschicht dienen. Hierdurch können mehrere Fertigungsschritte auf einfachste Weise kombiniert werden und der Boden weist durch die einheitliche Matrix bzw. Reaktionsharz optimale Verklebungen zwischen den einzelnen Schichten auf. Alternativ können auch nur einzelne Schritte wie z.B. der Oberflächenauftrag mit einem anderen Reaktionsharz erfolgen, um für die jeweilige Schicht spezifisch optimierte Eigenschaften zu erhalten.

Zu den Reaktionsharzen soll nur kurz ausgeführt werden wie folgt:

Die Eigenschaften von Kunstharzen beruhen in erster Linie auf dem strukturellen Aufbau (lineare oder verzweigtkettige Gestalt und Größe) sowie dem Grad der Vernetzung ihrer Moleküle und erst in zweiter Linie auf der chemischen Zusammensetzung. Hierdurch wird eine Gliederung für die Anwendbarkeit erschwert, trotzdem erfolgt nachfolgend eine kurze Charakterisierung einiger geläufigen Varianten. Diese hat keinen Vollständigkeitsanspruch und es sei auch darauf hingewiesen, da es in der chemischen Industrie zahlreiche Zumischungen und sonstige Optimierungen gibt, die zu spezifischen Eigenschaftsänderung führen:
Acryl- und Alkydharze/Polyesterharze (UP): Gute Elastizität, Haftung und Härte, aber behandelte Flächen können zur Vergrauung neigen, zudem nur mittlere Abriebsfestigkeit, Acrylharze nur als Filmbildner
Epoxydharze (EP): Sehr gute Wasserfestigkeit, aber Gefahr der Vergilbung und nur geringe Abriebsfestigkeit
Melaminharze (MF): Sehr gute Härte und Festigkeit, aber spröde und nur bedingt temperatur- und wetterfest
Phenolharze (PF): Hohe Füll- und Haftkraft, Formaldehydabspaltung auch nach Endhärte, meist bräunliche Farbe
Polyurethanharze (PU- und PUR) bzw. Harnstoffharze (UF): Gute Füll- und Haftkraft, sehr widerstandsfähige Versiegelungen, Raumluftbelastung (Formaldehyd) meist nur während Verarbeitung

Die große Gruppe der Reaktionsharze unterscheidet sich je nach Harzart oder Hersteller durch einzelne chemische Bindungen oder Beimischungen, die zu einer Optimierung spezifisch gewünschter Eigenschaften führen. Kritischer ist dagegen die Differenzierung der Reaktionsharze nach den erforderlichen Pressdrücke. EP und UP sind bereits handlaminierbar, d.h. es ist kein besonderer Pressdruck notwendig. Früher hatte EP Vorteile in der Nässebeständigkeit und einen deutlich höheren Preis, moderne UP Varianten zeigen die gleichen Eigenschaften allerdings auch zum gleichen Preis, so dass die Auswahl eher als subjektiv beurteilt werden muss. Die weiteren Reaktionsharze erfordern zur Aushärtung einen höheren Druck (Harz- und Hersteller-spezifisch, meist 4-40 bar), der bei ebenen Flächen weiterhin einen Furnierauftrag im gleichen Schritt ermöglicht, bei zunehmender Wölbung und zusammengesetzten Mustern allerdings zu optischen Fehlern führen kann.

Besonders interessant sind daher EP und UP, die auch im Prototypenbau weiter vertieft wurden. Beide sind meist in zwei Komponenten (Harz und Härter) erhältlich, die auf das Fasergewebe aufgetragen werden. Im industriellen Bereich gibt es zusätzlich auch vorgetränkte Prepads sowie die Möglichkeiten kurze Faser zu spritzen oder auch längere Fasern zu wickeln. Alle diese Verfahren sind hinreichend bekannt.

Zum Eindringen des Harzes in das Furnier kann auf folgendes hingewiesen werden: Aufgrund der dünnen Furnierstärke erfolgt bereits beim Furnierverkleben eine tlw. Tränkung der groben Holzstruktur. Durch erhöhten Harzauftrag und leichte Pressdrücke (gemäß bisheriger Erfahrungen sind bereits 0,5 bar mehr als ausreichend) kann diese weiter gesteigert werden.

Analog dringen auch Oberflächenlacke, die im Grunde die gleiche Gruppe der Reaktionsharze beinhalten, von oben in die grobe Holzstruktur ein; Eindringtiefen von 1 mm und tiefer sind hier keine Ausnahme.

Je nach Partikelgröße des Kunstharzes ergibt sich eine zellulare, interzellulare oder auch intermizellare Tränkung des Porenraums. Für die intermizellare Tränkung sind dabei Partikelgrößen unter 0,001 µm erforderlich, während ein zellulares Eindringen bereits bei Partikelgrößen in der Größenordnung 100 µm möglich ist.

Ausdrücklich genannt sollen hier auch die bekannten Verfahren des Tauchens, Einstelltränkung und die Kesseldrucktränkung werden. Im handwerklichen Bereich ist eine grobe Tränkung in Abhängigkeit von der Furnierstärke bereits durch Walzenauftrag und einseitigen Druck oder Vakuum erreichbar; im industriellen Bereich gibt es Verfahren zur Entkoppelung der Tränkung und Aushärtung, wie z.B. UV- oder Elektronenstrahl-Härtung.

Wenn eine Deckschicht auf das Furnier aufgebracht wird, sollte Ihre Elastizität gleich oder größer sein als die Elastizität der Furnierschicht, um der Gefahr des Absplitterns zu begegnen. Dabei genügt es einerseits, die Elastizität normal zur Faser zu übertreffen, es soll aber andererseits die durch die Harztränkung des Furniers erhöhte Elastizität berücksichtigt werden. Eine derartige Deckschicht, oder auch die Oberfläche bedeckendes Harz, die bzw. das unter Umständen den optischen Holzcharakter beeinträchtigt, kann durch Sandstrahlen zumindest aus den groben Poren entfernt werden, wodurch ein besonders dramatisches Bild einer Echtholzstruktur entsteht.

Neben einem Lackauftrag ist für Fußböden auch Filmbeschichtung eine geläufige Variante, d.h. Aufpressen von Folien oder getränkten Papieren mit Kunstharzen (z.B. Melamin- oder Phenolharzen). Hierdurch werden sehr gute Abriebfestigkeiten erreicht, allerdings mit einer aufwendigen Maschinentechnik und zu Lasten der natürlichen Holzstruktur.

Auch Öl- und Wachsvarianten sind für Holz geläufig, da insbesondere die natürliche Oberflächenstruktur erhalten bleibt. Öl- und Wachs verbessern die Imprägnierung mit Tiefenwirkung, aber führen zu keiner Erhöhung der mechanischen Werte (mit Ausnahme des Abriebs). Es sei darauf hingewiesen, dass eine derartige Imprägnierung einer dauerhaften Beanspruchung inkl. Wasser über die ganze Lebensdauer eines PKWs ohne gelegentliche Pflege nicht immer standhalten wird. Diese Variante bietet sich daher eher für Premiumfahrzeuge im Prestigesektor an. Zudem wird die Aufnahme von Öl oder Wachs bei einer evtl. zusätzlichen Harztränkung beschränkt.

Es kann die Tragschale den ganz oder teilweise eigentlichen Boden bzw. Unterboden des PKWs bilden, auf diesem Unterboden, gegebenenfalls unter Einfügen einer schalldämmenden Schichte, aufliegen oder auch auf einem "Originalteppichboden" des Fahrzeuges aufliegen, all dies wird von der Erfindung umfaßt.

Wesentliche Möglichkeiten der technischen Ausgestaltung bzw. Weiterentwicklung der Grundidee sind :

Optimierung des Quell- und Schwundeigenschaft durch minimale Furnierstärke; evtl. zusätzliche Auswahl von Holzsorten mit geringem Schwundverhalten und/oder eigenem Harz-/Ölanteil; vollflächige Verklebung auf einem isolierenden sowie Feuchtigkeitsquell- und schwundfreiem Trägermaterial; evtl. zusätzliche Kunstharztränkung als Porenfüller und Gegenkraft; evtl. imprägnierende bzw. isolierende Deckschicht.

Bei der Anwendung der Erfindung außerhalb des PKWs und insbesondere in Wohnungen, Büros oder Geschäften, hier vorzugsweise im Eingangsbereich oder im Bereich der Naßräume, ist für den Fachmann eine Bestimmung bzw. Übertragung der dafür notwendigen technischen Merkmale in Kenntnis der Erfindung leicht möglich, die mechanischen Probleme werden zumeist wegen der flächigen Unterstützung am Estrich oder Boden keine große Rolle spielen, die Tragschale wird daher hauptsächlich auf Druck beansprucht werden, ihr Elastizitätsmodul ist somit, insbesondere bei geringer Wandstärke (wegen der rein statischen Belastung leicht möglich), nicht besonders kritisch. Die Probleme mit der Feuchtigkeit sind die gleichen wie beim PKW und können daher auf die gleiche Weise gelöst werden, sodass keine technischen Hindernisse für eine Übertragung bestehen.

Ähnliches gilt für die Verwendung in anderen Verkehrsmitteln, die dem PKW viel näher stehen als die Verwendung in Gebäuden, sodass dabei erst recht keine technischen Überraschungen zu befürchten sind.

## Patentansprüche

1. Personenkraftwagen, sogenannter PKW, dessen Fußboden zumindest einen Bereich mit einer Tragschicht und einer Deckschicht aufweist, **dadurch gekennzeichnet, dass** die Deckschicht zumindest eine Schichte Holzfurnier mit einer Stärke von bis zu 3 mm, aufweist, die flächig mit der als Tragschale ausgebildeten Tragschicht verbunden ist und dass der Elastizitätsmodul des Materials, aus dem die Tragschale im Bereich der Deckschicht besteht, größer ist als der Elastizitätsmodul der Deckschicht.

2. Fußboden nach Anspruch 1, **dadurch gekennzeichnet, dass** die Außenabmessungen der Tragschale dem Bereich des Bodenbleches des Fahrzeuges, in dem sie den Fußboden bildet, der Form und den Abmessungen nach entspricht.

3. Fußboden nach Anspruche 1 oder 2, **dadurch gekennzeichnet, dass** die Tragschale im Bereich der Deckschicht auf der der Deckschicht abgewandten Seite eine Beschichtung aus Kunststoffolie aufweist.

4. Fußboden nach einem der voranstehenden Ansprüche, **dadurch gekennzeichnet, dass** die Deckschicht mit einer oder mehreren Schichten aus einem Material ausgewählt aus der Gruppe, bestehend aus: durchsichtigem Kunststoff, Lack, Wachs und Harz, überzogen bzw. beschichtet ist.

5. Fußboden nach einem der voranstehenden Ansprüche, **dadurch gekennzeichnet, dass** der Klebstoff für das Deckmaterial ein Klebstoff aus der Gruppe: Harnstoffharzleime, Polyvinylacetatleime, Äthen-Vinylacetatleime, Schmelzkleber, Polyurethane, Epoxydharzkleber und Resorcinleime ist.

6. Fußboden nach einem der voranstehenden Ansprüche, **dadurch gekennzeichnet, dass** die Verstärkung des Trägermaterials aus Verstärkungsfasern besteht, deren Material aus der Gruppe bestehend aus: natürliche Fasern, Glasfasern, Aramidfasern und Kohlefasern, ausgewählt ist.

7. Fußboden nach Anspruch 6, **dadurch gekennzeichnet, dass** das Trägermaterial aus der Gruppe bestehend aus: verstärktes Epoxyharz, verstärktes Melaminharz, verstärktes Phenolharz, verstärktes Polyamid, verstärkte Polyurethanharze bzw. Harnstoffe oder verstärkter ungesättigter Polyester, ausgewählt ist.

8. Fußboden nach einem der voranstehenden Ansprüche, **dadurch gekennzeichnet, dass** die Deckschicht zumindest teilweise, bevorzugt im Wesentlichen vollständig mit Harz durchtränkt ist.

9. Fußboden nach einem der voranstehenden Ansprüche, **dadurch gekennzeichnet, dass** die Deckschicht beim Verbinden mit der Tragschale eine Stärke zwischen 0,2 und 3 mm aufweist.

10. Fußboden nach einem der voranstehenden Ansprüche, **dadurch gekennzeichnet, dass** die Deckschicht nach dem Verbinden mit der Tragschale abgeschliffen wird.

11. Fußboden nach einem der voranstehenden Ansprüche, **dadurch gekennzeichnet, dass** die Deckschicht nach dem Verbinden mit der Tragschale sandgestrahlt wird.

12. Verfahren zur Herstellung eines Fußbodens nach einem der Ansprüche 1 bis 11, **dadurch gekennzeichnet, dass** die Tragschale aus einem Duroplast besteht, das im noch nicht gehärteten Zustand mit der Deckschicht verbunden wird und sodann in die gewünschte Form gebracht und ausgehärtet wird.

## Claims

1. Motor vehicle, so-called car, whose floor has at least one area with a support layer and a covering layer, **characterized in that** the covering layer has at least one layer of wood veneer with a thickness of up to 3 mm, which is linked across its surface with the support layer formed as a support shell, and **in that** the modulus of elasticity of the material, of which the support shell consists in the area of the covering layer, is higher than the modulus of elasticity of the covering layer.

2. Floor according to Claim 1, **characterized in that** the outside dimensions of the support shell correspond, as regards shape and dimensions, to the area of the floor panel of the vehicle, in which it forms the floor.

3. Floor according to Claims 1 or 2, **characterized in that** the support shell in the area of the covering layer on the side facing away from the covering layer has a coating made of plastic foil.

4. Floor according to any one of the preceding claims, **characterized in that** the covering layer is over-laid or over-coated with one or more layers consisting of a material selected from the group consisting of: transparent plastic, lacquer, wax and resin.

5. Floor according to any one of the preceding claims, **characterized in that** the adhesive for the covering material is an adhesive from the group: urea resin glues, polyvinyl acetate glues, ethylene vinyl acetate glues, thermoplastic adhesives, PU, epoxy resin adhesives and resorcin glues.

6. Floor according to any one of the preceding claims, **characterized in that** the reinforcement of the support material consists of reinforcing fibres, whose material is selected from the group consisting of: natural fibres, glass fibres, aramide fibres and carbon fibres.

7. Floor according to Claim 6, **characterized in that** the support material is selected from the group consisting of: reinforced epoxy resin, reinforced melamine resin, reinforced phenolic resin, reinforced polyamide, reinforced PU resins or urea or reinforced unsaturated polyester.

8. Floor according to any one of the preceding claims, **characterized in that** the covering layer is impregnated at least partly, preferably essentially completely, with resin.

9. Floor according to any one of the preceding claims, **characterized in that** the covering layer, when linked with the support shell, has a thickness of between 0.2 and 3 mm.

10. Floor according to any one of the preceding claims, **characterized in that** the covering layer is sanded down after being linked with the support shell.

11. Floor according to any one of the preceding claims, **characterized in that** the covering layer is sandblasted after being linked with the support shell.

12. Method for producing a floor according to any one of Claims 1 to 11, **characterized in that** the support shell consists of a thermosetting polymer, which is linked with the covering layer in the not yet hardened state, then formed into the desired shape and hardened.

## Revendications

1. Voiture particulière dont le plancher présente au moins une zone ayant une couche de support et une couche de recouvrement, **caractérisée en ce que** la couche de recouvrement présente au moins une couche de contreplaqué d'une épaisseur jusqu'à 3 mm qui est raccordée à plat à la couche de support se présentant sous la forme d'une coque de support et **en ce que** le module d'élasticité du matériau dont est constituée la coque de support dans la zone de la couche de recouvrement, est supérieur au module d'élasticité de la couche de recouvrement.

2. Plancher selon la revendication 1, **caractérisé en ce que** les dimensions externes de la coque de support correspondent à la zone de la tôle de fond du véhicule, dans laquelle cette coque forme le plancher suivant la forme et les dimensions.

3. Plancher selon la revendication 1 ou 2, **caractérisé en ce que** la couche de support présente un revêtement en feuille synthétique dans la zone de la couche de recouvrement sur la face opposée à la couche de recouvrement.

4. Plancher selon l'une quelconque des revendications précédentes, **caractérisé en ce que** la couche de recouvrement est recouverte ou revêtue d'une ou plusieurs couches d'un matériau choisi dans le groupe constitué des matériaux suivants : un matériau synthétique transparent, un vernis, une cire et une résine.

5. Plancher selon l'une quelconque des revendications précédentes, **caractérisé en ce que** la colle pour le matériau de recouvrement est une colle choisie dans le groupe constitué des colles à base de résine d'urée, des colles à base de poly(acétate de vinyle), des colles à base d'éthylène-acétate de vinyle, des colles fusibles, des polyuréthannes, des colles à base de résine époxyde et des colles à base de résorcine.

6. Plancher selon l'une quelconque des revendications précédentes, **caractérisé en ce que** le renforcement du matériau de support est constitué de fibres de renforcement, dont le matériau est choisi dans le groupe constitué des fibres naturelles, des fibres de verre, des fibres d'aramide et des fibres de carbone.

7. Plancher selon la revendication 6, **caractérisé en ce que** le matériau de support est choisi dans le groupe constitué des substances suivantes : résine époxyde renforcée, résine mélamine renforcée, résine phénolique renforcée, polyamide renforcé, résines de polyuréthanne ou urées renforcées ou polyester insaturé renforcé.

8. Plancher selon l'une quelconque des revendications précédentes, **caractérisé en ce que** la couche de recouvrement est imprégnée au moins partiellement, de préférence sensiblement complètement avec de la résine.

9. Plancher selon l'une quelconque des revendications précédentes, **caractérisé en ce que** la couche de recouvrement présente lors du raccordement à la coque de support une épaisseur entre 0,2 et 3 mm.

10. Plancher selon l'une quelconque des revendications précédentes, **caractérisé en ce que** la couche de recouvrement est meulée après le raccordement à la coque de support.

11. Plancher selon l'une quelconque des revendications précédentes, **caractérisé en ce que** la couche de recouvrement est décapée au sable après le raccordement à la coque de support.

12. Procédé de fabrication d'un plancher selon l'une quelconque des revendications 1 à 11, **caractérisé en ce que** la coque de support est constituée d'un duroplaste qui est raccordé, à l'état non encore durci, à la couche de recouvrement et est ensuite amené à la forme souhaitée et durci.
